# EUROPEAN PATENT SPECIFICATION

(11) **EP 2 860 621 B1**
(45) Date of publication and mention of the grant of the patent: **27.06.2018**
(21) Application number: 13188057.7
(22) Date of filing: 10.10.2013
(51) Int. Cl.: G06F 3/0488, G06F 3/041

(54) **Human-machine interface device adapted for easy maintenance and a method therefor**
Mensch-Maschine-Schnittstellenvorrichtung für Wartungsfreundlichkeit und Verfahren dafür
Dispositif d'interface homme-machine conçu pour un entretien facile et procédé associé

(43) Date of publication of application: 15.04.2015
(73) Proprietor: Siemens Aktiengesellschaft, 80333 München (DE)
(72) Inventor: Bhattacharjee, Samrat, 560078 Bangalore (IN); Chalapuradudi Bandigowda, Anandkumar, 560058 Bangalore (IN); Kulkarni, Shrinivas, 560085 Bangalore (IN)
(74) Representative: Isarpatent

(56) References cited:
- JP-A- H08 263 215
- JP-A- 2000 194 504
- US-A- 4 952 932
- US-A1- 2010 045 623
- US-B1- 6 208 331

## Description

The present invention generally relates to human-machine interface devices and more particularly, to a human-machine interface device adapted for easy maintenance and a method therefor.

Human-machine interface devices are used in industrial automation systems to display and control process data related to industrial equipment, and hence, act as important aids for the operating personnel. This function is generally referred to as Supervisor Control and Data Acquisition (SCADA). To this end the human-machine interface device generally has specific hardware, e.g. a touch-screen and specific software is also operated therein. This provides functions, which enhance user-friendliness, quality and safety of operation by an operator. Thus, human-machine interface devices can be used to visualize, control, configure, and generate interactive process maps related to the industrial equipment. On the one hand, this allows the selective display of responses of the industrial equipment, generally in the form of measured values and messages. On the other hand, the customized pre-definition of control operations and data inputs allows the industrial equipment to be switched to required states.

The term human-machine interface device is a generic term covering all components associated with this group of devices, which can be stationary or mobile.

It is quite common that such human-machine interface devices are deployed in harsh environments where these devices are exposed to not only high temperatures but also smoke, dust and oil fumes and so on. While the human-machine interface device can be provided with suitable protective casings, the touch-sensitive display surfaces, which act as an important medium of input and output, remain exposed to external environment.

It is therefore often necessary to clean the touch-sensitive display surface at regular intervals to ensure smooth operation of the human-machine interface device. On one hand, in several instances, it is not desirable to switch-off the display in the human-machine interface device for cleaning the same. On the other hand, it is problematic to clean the touch-sensitive display surface without inadvertently providing one or more user inputs to the human-machine interface devices.

In order to overcome the foregoing problem, the state of the art human-machine interface devices provide a cleaning operating mode. When the cleaning operating mode is activated, the display becomes white. This is quite helpful as not only the risk of providing inadvertent inputs to the human-machine interface device is eliminated but also any piece of dirt accumulated on the touch-sensitive display surface is easily visible and hence, the touch-sensitive display surface can be effectively cleaned. Although quite advantageous, the aforementioned cleaning operating mode suffers from various limitations. First and foremost, an operator is prevented from viewing application user-interface which would otherwise be displayed on the human-machine interface device. Moreover, in many cases, once the cleaning operating mode is activated, there is no overriding provision in various human-machine interface devices available in state-of-the-art. In certain critical processes, these limitations could prove to be highly undesirable.

For example, JP3448497K2 discloses a device which operates in normal mode as well as cleaning mode. The cleaning mode is a mode in which the user can clean touch operation surface of the touch panel input device. When the user touch operates a cleaning mode key, the device switches to the first cleaning mode in which first display area is cleaned. After a period of time, the devices switches from the first cleaning mode to a second cleaning mode such that the first display area will return to original display and user is allowed to clean a second display area beside the first display area. Thereafter, when the user presses the cleaning mode key, the device switches from the second cleaning mode to a normal mode such that whole display area returns to the original display.

US 4952932 A discloses an information processing apparatus comprising a mode setting device to set cleaning mode of touch panel on screen of Cathode Ray Tube (CRT) display and input controller to set an input inhibition area of information on the touch panel when the cleaning mode is set. When the cleaning mode is set, all of function menu and the like displayed are erased and a character pattern is set to starting screen and displayed on the screen of the CRT display. The portion in which the character pattern is displayed is the portion of the touch panel which can be input. During the cleaning operation, the character pattern is slightly moved in one direction. For instance, the character pattern indicates the direction of cleaning.

In light of the foregoing, there is a need for a human-machine interface device that facilitates easy maintenance thereof whereby a touch-sensitive display surface therein may be cleaned without various drawbacks existent in the prior art.

It is therefore an object of the present invention to provide a human-machine interface device adapted for easy maintenance and a method therefor.

The object is achieved by providing a human-machine interface device according to claim 1 and a method for operating the same according to claim 11. Further embodiments of the present invention are addressed in respective dependent claims.

The underlying concept of the present invention is to render a clean-screen user interface as a transparent superimposition over a currently displayed application user-interface such that the application user-interface remains visible to a user of the human-machine interface device whereas various touch-based inputs provided by the user are associated with said clean-screen user interface. Thus, the risk of inadvertently providing an input to a runtime application being executed on the human-machine interface device is eliminated. The user inputs on the human-machine interface device define an interaction area on a touch-sensitive display surface therein. The clean-screen user interface, which is normally transparent, is rendered at least partially non-transparent in a partial region thereof corresponding to the interaction area, in response to the user inputs. Thus, only a selected area can be rendered in a non-transparent colour, such as white, to aid cleaning of the human-machine interface device, while the remaining portions of the application user-interface remain visible to the user of the human-machine interface device. On one hand, this aids in efficient cleaning of the touch-sensitive display surface since oil/dirt particles are easy to spot in white background, as an example; on the other hand, the user remains well-informed regarding various events happening on the application user-interface.

In a first aspect of the present invention, a human-machine interface device is provided. The human-machine interface device comprises a processing module and a display module. The processing module is configured for executing a runtime application, wherein the runtime application comprises at least one application user-interface. The display module is configured for rendering the application user-interface on a touch-sensitive display surface, and is further configured for sensing a touch-based interaction therewith. The human-machine interface device, according to the first aspect of the present invention, is operable in a cleaning operating mode. In the cleaning operating mode, the display module renders a clean-screen user interface in conjunction with the application user-interface as a transparent superimposition thereon. The clean-screen user interface is rendered in such manner that the application user-interface remains visible on the touch-sensitive display surface whereas the touch-based inputs received therefrom are associated with the clean-screen user interface. The display module within the human-machine interface device is configured for determining a partial region of the clean-screen user interface based on a touch-based interaction with the touch-sensitive display surface and rendering the partial region at least partially non-transparent such that remaining regions of the application user-interface remain visible to a user of the human-machine interface device.

In a second aspect of the present invention, a method for operating a human-machine interface device, as described in the first aspect of the present invention, is provided. Initially, a clean-screen user interface is rendered in conjunction with the application user-interface as a transparent superimposition thereon such that the application user-interface remains visible on the touch-sensitive display surface whereas the touch-based inputs received therefrom are associated with the clean-screen user interface. Subsequently, a partial region of the clean-screen user interface is determined based on a touch-based interaction with the touch-sensitive display surface. Finally, the partial region, as previously determined, is rendered at least partially non-transparent such that remaining regions of the application user-interface remain visible to a user of the human-machine interface device. Accordingly, the present invention provides a human-machine interface device adapted for easy maintenance and a method therefor.

The present invention is further described hereinafter with reference to illustrated embodiments shown in the accompanying drawings, in which:
- FIG 1: illustrates a front view of a human-machine interface device in accordance with an embodiment of the present invention,
- FIG 2: illustrates a schematic view of a human-machine interface device in accordance with an embodiment of the present invention,
- FIG 3: illustrates an exemplary combination of application user-interface and clean-screen user interface in accordance with an embodiment of the present invention,
- FIG 4: illustrates an exemplary combination of application user-interface and clean-screen user interface in accordance with an embodiment of the present invention,
- FIG 5: illustrates an exemplary combination of application user-interface and clean-screen user interface in accordance with yet another embodiment of the present invention, and
- FIG 6: illustrates a method for operating a human-machine interface device in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

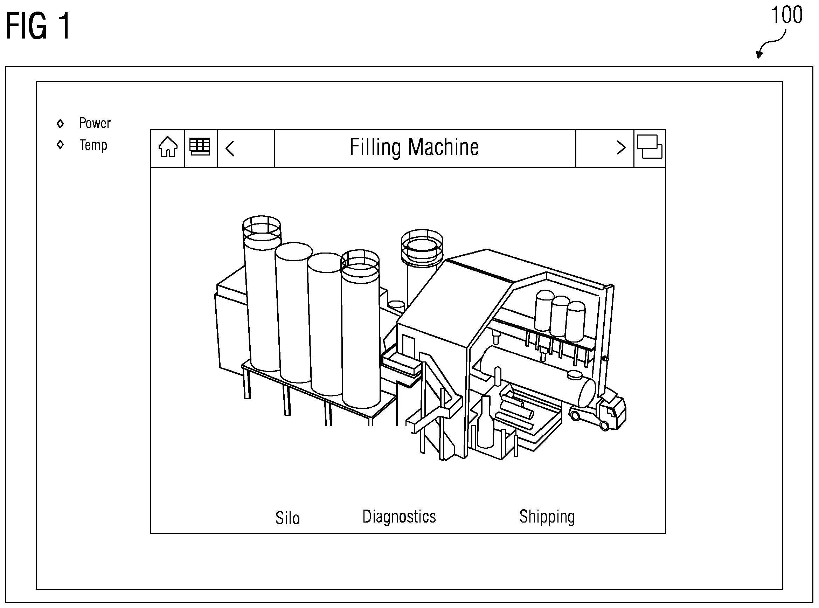

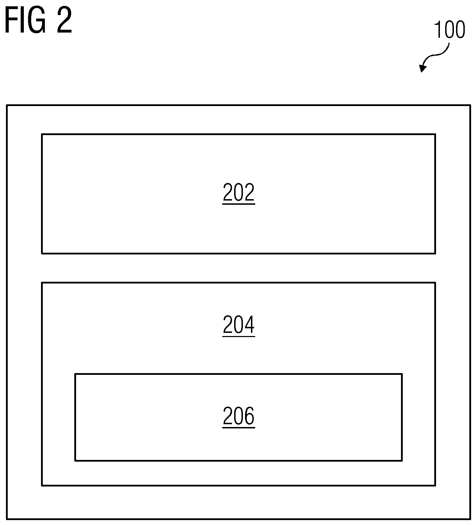

Referring now to FIGS 1 and 2, a front view and a schematic view of a human-machine interface device 100 are shown respectively in accordance with an embodiment of the present invention.

As depicted in FIG 2, the human-machine interface device 100 includes a processing module 202 and a display module 204. The display module 204 includes a touch-sensitive display surface 206.

The processing module 202 executes a runtime application. The runtime application includes at least one application user-interface. Each application user-interface is generally a graphical user interface which pictorially depicts one or more process equipment installed in an industrial plant. One such as application user-interface can be seen in FIG 1.

The processing module 202 is generally configured for generating frame-buffer data to be rendered through display module 204.

The display module 204 renders the application user-interface on the touch-sensitive display surface 206 provided therein. The touch-sensitive display surface 206 also senses a touch-based interaction therewith, that is to say, a user of the human-machine interface device 100 may provide one or more touch-based inputs to the human-machine interface device 100 through touching the touch-sensitive display surface 206 provided therein. It should be noted that the touch-based sensing may be implemented using any suitable technique known in the art and the present invention is not limited to any specific touch sensing modality.

The human-machine interface device 100 of the present invention may be operated in two distinct operating modes, namely, a normal operating mode and a cleaning operating mode.

During the normal operating mode, the operation of the human-machine interface device 100 of the present invention is similar to that of a convention human-machine interface device. In this mode, the application user-interface is rendered onto the touch-sensitive display surface 206 and the user is able to view the same and also, provide various touch-based inputs through the touch-sensitive display surface 206, as may be desired.

When the cleaning operating mode is activated, the display module 204 renders a clean-screen user interface in conjunction with the application user-interface. In accordance with various embodiments of the present invention, the clean-screen user interface is rendered as a transparent superimposition, that is to say that the clean-screen user interface acts as a transparent layer such that even when the clean-screen user interface is rendered in the foreground as a superimposition on the application user-interface running in the background, the user of the human-machine interface device 100 continues to view the same application user-interface. While the clean-screen user interface is rendered as a transparent superimposition thereon such that the application user-interface remains visible on the touch-sensitive display surface 206, the touch-based inputs received from the touch-sensitive display surface 206 are associated with the clean-screen user interface. Thus, while the cleaning operating mode is activated on the human-machine interface device 100, any touch-based inputs from the user are not directed towards the runtime application but instead are processed in a different manner, as will become apparent from the following description.

During the cleaning operating mode, whenever a touch-based interaction with touch-sensitive display surface 206 is detected, the display module 204 determines a partial region of the clean-screen user interface based thereon. The partial region is rendered at least partially non-transparent. This is performed to highlight dirt/oil particles deposited on the touch-sensitive display surface 206. In various examples, any bright colour would be able to achieve the desired results. In one example, the partial region is made white. This is not only consistent with the conventional white-screen clean mode but also is most efficient in highlighting dirt/oil deposited on the touch-sensitive display surface 206.

As would now be understood, when the user initiates a cleaning process, a region of the touch-sensitive display surface 206 that the user is currently cleaning becomes white, whereas the remaining region of the touch-sensitive display surface 206 continues to provide a view of the application user-interface running in the background. Thus, the user is able to continually receive information being provided through the application user-interface.

In various exemplary embodiments of the present invention, the partial region at least corresponds to an interaction area on the touch-sensitive display surface engaged in touch-based interaction. In other words, the display module 204 detects a region of touch-based interaction on the touch-sensitive display surface 206, being referred to as "interaction area" in the present description; and a corresponding region in the clean-screen user interface is rendered non-transparent. In various embodiments the correspondence between the interaction area on the touch-sensitive display surface 206 and the partial region on the clean-screen user interface may be defined in any suitable manner.

In one exemplary embodiment of the present invention, the partial region is dynamically updated in accordance with a change in the interaction area. Thus, when the user cleans a first area on the touch-sensitive display surface 206 and shifts to a second area thereon for cleaning the first area becomes transparent again.

In one exemplary embodiment of the present invention, the partial region remains at least partially non-transparent for a predetermined time period subsequent to termination of the touch-based interaction associated therewith. Thus, when the user cleans a first area on the touch-sensitive display surface 206 and shifts to a second area thereon for cleaning the first area becomes transparent again after a fixed time period. According to this technical feature, as the user wipes across the touch-sensitive display surface 206, a trail is created, the user is able to see the first area illuminated in a non-transparent background (e.g. white background) and ensure that proper and efficient cleaning thereof.

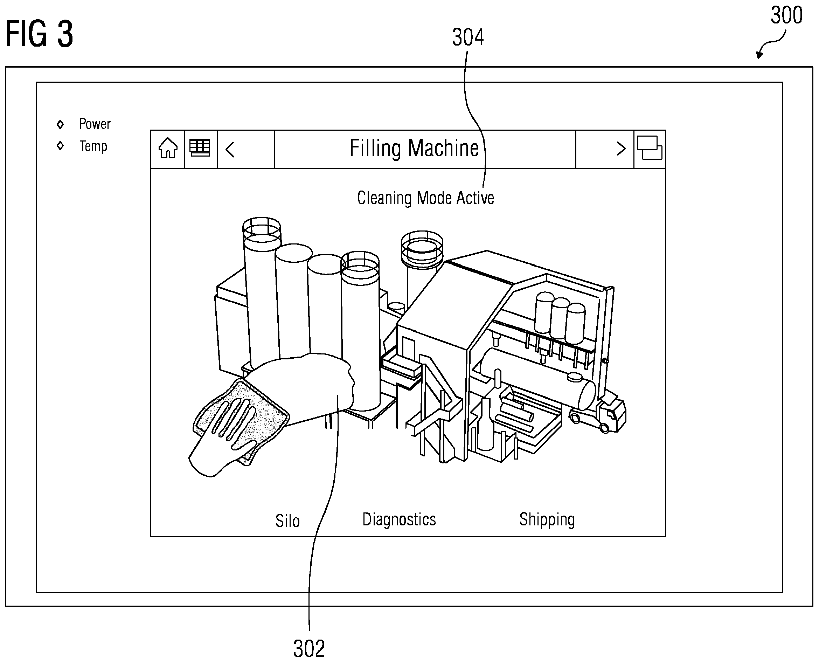

Referring now to FIGS 3, 4, and 5 along with FIGS 1 and 2, various technical features pertaining to activation and deactivation of the cleaning operating mode on the human-machine interface device 100 will now be explained. FIGS 3, 4, and 5 show combinations of application user-interface and clean-screen user interface 300, 400, and 500 respectively. The term combination is intended to mean that the clean-screen user interface is rendered as a transparent superimposition on the application user-interface, as explained earlier in the present description.

The combination 300 shows a partial region 302 and a cleaning operating mode notification message 304. Similarly, the combination 400 shows a partial region 402, a cleaning operating mode notification message 404, and a remaining time period 406. Further, the combination 500 shows a partial region 502, a cleaning operating mode notification message 504, and a user prompt 506 for confirming deactivating the cleaning operating mode.

In an exemplary embodiment of the present invention, the human-machine interface device 100 is configured with suitable means such that a predefined user input may be provided to activate the cleaning operating mode therein. The processing module 202 receives the predefined user input and activates the cleaning operating mode based thereon.

In an exemplary embodiment of the present invention, the display module 204 is configured for displaying a notification message 304 on the touch-sensitive display surface 206 while the human-machine interface device 100 is being operated in the cleaning operating mode, as can be seen in FIG 3.

The processing module 202 is also configured for deactivating the cleaning operating mode.

In one exemplary embodiment of the present invention, the processing module 202 is configured for deactivating the cleaning operating mode based on a user input therefor. Similar to the case of activating the cleaning operating mode, the human-machine interface device 100 may be provided with suitable input means and predefined user inputs may be configured for deactivating the cleaning operating mode. The processing module 202 receives the predefined user input and deactivates the cleaning operating mode based thereon.

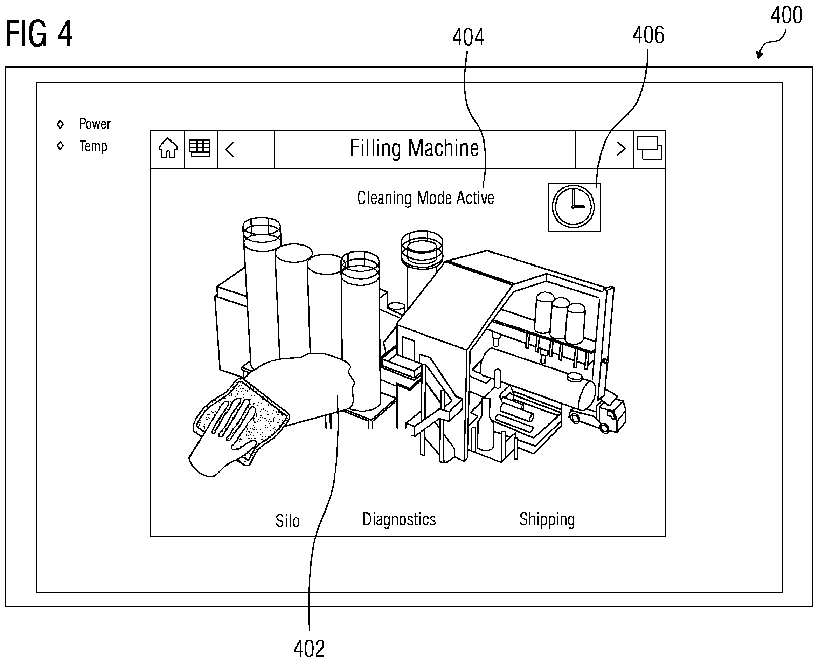

In another exemplary embodiment of the present invention, the processing module 202 is further configured for deactivating the cleaning operating mode based on elapse of a predefined time period. Thus, when the cleaning operating mode is activated and in case, the user forgets to deactivate the same, the processing module 202 automatically restores the normal operating mode of the human-machine interface device 100 after elapse of the predefined time period. The predefined time period, and in particular, the remaining time period before the cleaning operating mode is automatically deactivated, may be indicated on the clean-screen user interface, as shown as the remaining time period 406 in FIG 4.

In yet another exemplary embodiment of the present invention, the processing module 202 is further configured for identifying a predefined critical condition in the runtime application and deactivating the cleaning operating mode based thereon. This technical feature is particularly advantageous in case of industrial applications executing critical processes. In this embodiment of the present invention, the processing module 202 keeps monitoring the runtime application for any predefined critical events. When any predefined critical event occurs in the runtime application, the processing module 202 deactivates the cleaning operating mode and restores the human-machine interface device 100 to the normal operating mode thereof such that the user is able to provide suitable user inputs and initiate necessary actions in response to the critical event, as may be required.

It should be noted that while three distinct exemplary embodiments of the present invention with regard to deactivating the cleaning operating mode are explained above, any suitable combination thereof may be used.

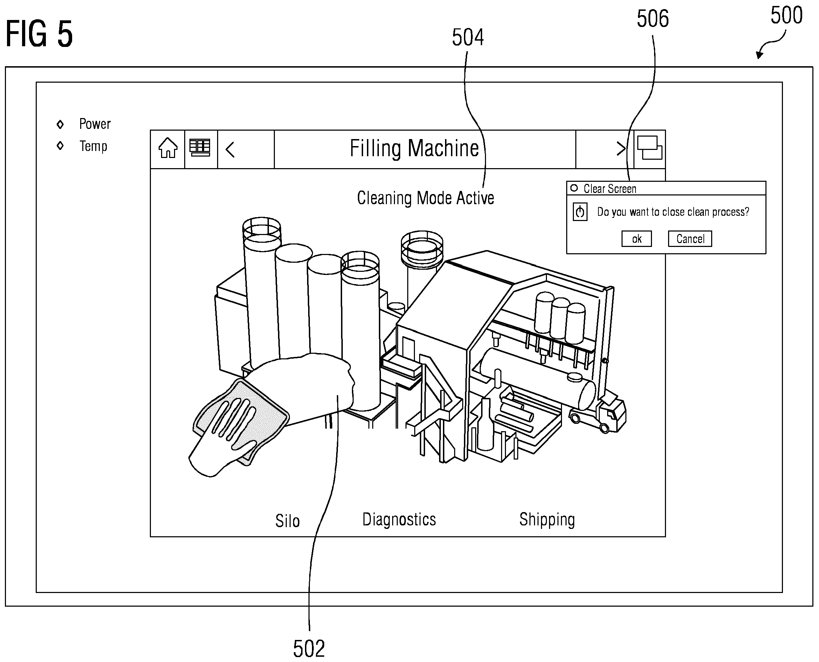

In an exemplary embodiment of the present invention, the processing module 202 is configured for prompting for a user input for providing a confirmation for deactivating the cleaning operating mode of the human-machine interface device 100, as can be seen as user prompt 506 in FIG 5.

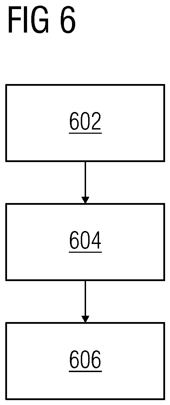

Referring now to FIG 6, a method for operating a human-machine interface device 100, as described in conjunction with preceding figures, is illustrated in accordance with an embodiment of the present invention.

As step 602, clean-screen user interface is rendered in conjunction with the application user-interface as a transparent superimposition thereon such that the application user-interface remains visible on the touch-sensitive display surface 206 provided in the human-machine interface device 100 whereas the touch-based inputs received therefrom are associated with the clean-screen user interface.

At step 604, a partial region of the clean-screen user interface is determined based on a touch-based interaction with the touch-sensitive display surface 206.

At step 606, the partial region is rendered at least partially non-transparent.

According to various exemplary embodiments of the present invention, the partial region at least corresponds to an interaction area on the touch-sensitive display surface 206 engaged in touch-based interaction. Further, the partial region is dynamically updated in accordance with a change in the interaction area. In one exemplary embodiment of the present invention, the partial region remains at least partially non-transparent for a predetermined time period subsequent to termination of the touch-based interaction associated therewith. As explained earlier, this helps to create a trail as a user of the human-machine interface device 100 wipes across the touch-sensitive display surface 206.

The method of the present invention also provides for activating and deactivating the cleaning operating mode of the human-machine interface device 100.

In an exemplary embodiment of the present invention, the cleaning operating mode is activated based on a user input therefor. Similarly, in various exemplary embodiments of the present invention, the cleaning operating mode may be deactivated based on a user input therefor, elapse of a predefined time period, a predefined critical condition in the runtime application, and/or a combination thereof, as already explained in conjunction with the preceding figures.

One exemplary workflow is provided as follows.

During routine maintenance activity, a user / maintenance personnel of the human-machine interface device 100 activates the cleaning operating mode using a dedicated hard/soft key provided on the human-machine interface device 100.

Subsequently, the application user-interface, which provides a control and monitoring function, is moved to the background and a new clean-screen user interface is created and rendered in the foreground as a transparent superimposition on the application user-interface.

While cleaning the touch-sensitive display surface 206, the region of the touch-sensitive display surface 206 which is cleaned is shown in white (or any bright colour) such as any dirt/oil particles deposited in that region become easily visible. At the same time, the user is able to view any information being displayed through the application user-interface running in the background.

While the cleaning operating mode is active, in case any critical condition occurs, which may trigger alarm in some cases, the cleaning operating mode is deactivated whereby the clean-screen user interface is eliminated and the application user-interface is moved to the foreground such that the user of the human-machine interface device 100 is able to provide any required inputs to the runtime application to the application user-interface. On the other hand, in case no critical condition occurs, then cleaning operating mode continues as may be configured.

Thus, the present invention provides to provide a human-machine interface device adapted for easy maintenance and a method therefor.

The present invention offers several advantages over prior art techniques. First and foremost, the application user-interface remains visible to the user of the human-machine interface device and hence, the user remains reasonably updated regarding the information being displayed through the application user-interface. In addition, as the user wipes across the touch-sensitive display surface, a region being cleaned becomes white (or non-transparent) such as to highlight dirt/oil particles deposited thereon thereby, ensuring more efficient cleaning of the human-machine interface device 100.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A human-machine interface device (100), said human-machine interface device (100) comprising
- a processing module (202), said processing module (202) configured for executing a runtime application, wherein said runtime application comprises at least one application user-interface; and
- a display module (204), said display module (204) configured for rendering said application user-interface on a touch-sensitive display surface (206) provided therein, and further configured for sensing a touch-based interaction therewith,
**characterized in that**, said human-machine interface device (100) is operable in a cleaning operating mode, wherein said display module (204) renders a clean-screen user interface in conjunction with said application user-interface as a transparent superimposition thereon such that said application user-interface remains visible on said touch-sensitive display surface (206) whereas said touch-based inputs received therefrom are associated with said clean-screen user interface, wherein said display module (204) is configured for determining a partial region of said clean-screen user interface based on a touch-based interaction with said touch-sensitive display surface (206) and rendering said partial region at least partially non-transparent such that remaining regions of the application user-interface remain visible to a user of the human-machine interface device (100).

2. The human-machine interface device (100) according to claim 1, wherein said partial region at least corresponds to an interaction area on said touch-sensitive display surface (206) engaged in touch-based interaction.

3. The human-machine interface device (100) according to claim 2, wherein said partial region is dynamically updated in accordance with a change in said interaction area.

4. The human-machine interface device (100) according to any of the preceding claims, wherein said partial region remains at least partially non-transparent for a predetermined time period subsequent to termination of said touch-based interaction associated therewith.

5. The human-machine interface device (100) according to any of the preceding claims, wherein said processing module (202) is further configured for activating said cleaning operating mode based on a user input therefor.

6. The human-machine interface device (100) according to any of the preceding claims, wherein said display module (204) is further configured for displaying a notification message (504) on said touch-sensitive display surface (206) while said human-machine interface device (100) is being operated in said cleaning operating mode.

7. The human-machine interface device (100) according to any of the preceding claims, wherein said processing module (202) is further configured for deactivating said cleaning operating mode based on a user input therefor.

8. The human-machine interface device (100) according to any of the preceding claims, wherein said processing module (202) is further configured for deactivating said cleaning operating mode based on elapse of a predefined time period.

9. The human-machine interface device (100) according to any of the preceding claims, wherein said processing module (202) is further configured for identifying a predefined critical condition in said runtime application and deactivating said cleaning operating mode based thereon.

10. The human-machine interface device (100) according to any of claims 7 to 9, wherein said processing module (202) is configured for prompting for a user input for providing a confirmation for deactivating said cleaning operating mode.

11. A method for operating a human-machine interface device (100), said human-machine interface device (100) comprising a processing module (202), said processing module (202) configured for executing a runtime application, wherein said runtime application comprises at least one application user-interface; and a display module (204), said display module (204) configured for rendering said application user-interface on a touch-sensitive display surface (206) provided therein, and further configured for sensing a touch-based interaction therewith, said method comprising:
- rendering (602) a clean-screen user interface in conjunction with said application user-interface as a transparent superimposition thereon such that said application user-interface remains visible on said touch-sensitive display surface (206) whereas said touch-based inputs received therefrom are associated with said clean-screen user interface,
- determining (604) a partial region of said clean-screen user interface based on a touch-based interaction with said touch-sensitive display surface (206), and
- rendering (606) said partial region at least partially non-transparent such that remaining regions of the application user-interface remain visible to a user of the human-machine interface device (100).

12. The method according to claim 11, wherein said partial region at least corresponds to an interaction area on said touch-sensitive display surface (206) engaged in touch-based interaction.

13. The method according to any of the preceding claims 11 and 12, wherein said partial region is dynamically updated in accordance with a change in said interaction area, and further wherein said partial region remains at least partially non-transparent for a predetermined time period subsequent to termination of said touch-based interaction associated therewith.

14. The method according to any of the preceding claims 11 to 13 further comprising activating said cleaning operating mode based on a user input therefor.

15. The method according to any of the preceding claims 11 to 14 further comprising deactivating said cleaning operating mode based on a user input therefor, elapse of a predefined time period, a predefined critical condition in said runtime application, and/or a combination thereof.

## Patentansprüche

1. Mensch-Maschine-Schnittstellenvorrichtung (100), die Mensch-Maschinen-Schnittstellenvorrichtung (100) umfassend
- ein Verarbeitungsmodul (202), das Verarbeitungsmodul(202) konfiguriert, um eine Laufzeitanwendung auszuführen, wobei die Laufzeitanwendung mindestens eine Anwendungsbenutzerschnittstelle umfasst; und
- ein Anzeigemodul (204), das Anzeigemodul (204) konfiguriert, um die Anwendungsbenutzerschnittstelle auf einer darin vorgesehenen, berührungsempfindlichen Anzeigefläche (206) zu erbringen, und ferner konfiguriert, um eine berührungsbasierte Interaktion damit zu erkennen,
**dadurch gekennzeichnet, dass** die Mensch-Maschine-Schnittstellenvorrichtung (100) in einem Reinigungsbetriebsmodus funktionsbereit ist, wobei das Anzeigemodul (204) eine Benutzerschnittstelle mit sauberem Bildschirm in Verbindung mit der Anwendungsbenutzerschnittstelle als eine transparente Überlagerung darauf erbringt derart, dass die Anwendungsbenutzerschnittstelle auf der berührungsempfindlichen Anzeigefläche (206) sichtbar bleibt, während die berührungsbasierten, davon empfangenen Eingaben mit der Benutzerschnittstelle mit sauberem Bildschirm assoziiert sind, wobei das Anzeigemodul (204) konfiguriert ist, um einen Teilbereich der Benutzerschnittstelle mit sauberem Bildschirm auf der Basis einer berührungsbasierten Interaktion mit der berührungsempfindlichen Anzeigefläche (206) festzulegen und um den Teilbereich mindestens teilweise nicht transparent zu machen derart, dass verbleibende Bereiche der Anwendungsbenutzerschnittstelle für einen Benutzer der Mensch-Maschine-Schnittstellenvorrichtung (100) sichtbar bleiben.

2. Mensch-Maschine-Schnittstellenvorrichtung (100) nach Anspruch 1, wobei der Teilbereich mindestens einer Interaktionsfläche auf der berührungsempfindlichen Anzeigefläche (206) entspricht, die an der berührungsbasierten Interaktion beteiligt ist.

3. Mensch-Maschine-Schnittstellenvorrichtung (100) nach Anspruch 2, wobei der Teilbereich in Übereinstimmung mit einer Änderung der Interaktionsfläche dynamisch aktualisiert wird.

4. Mensch-Maschine-Schnittstellenvorrichtung (100) nach einem der vorhergehenden Ansprüche, wobei der Teilbereich für einen vorgegebenen Zeitraum im Anschluss an die Beendigung der damit assoziierten, berührungsbasierten Interaktion mindestens teilweise nicht transparent bleibt.

5. Mensch-Maschine-Schnittstellenvorrichtung (100) nach einem der vorhergehenden Ansprüche, wobei das Verarbeitungsmodul (202) ferner konfiguriert ist, um den Reinigungsbetriebsmodus auf der Basis einer entsprechenden Benutzereingabe zu aktivieren.

6. Mensch-Maschine-Schnittstellenvorrichtung (100) nach einem der vorhergehenden Ansprüche, wobei das Anzeigemodul (204) ferner konfiguriert ist, um eine Benachrichtigungsmeldung (504) auf der berührungsempfindlichen Anzeigefläche (206) anzuzeigen, während die Mensch-Maschine-Schnittstellenvorrichtung (100) im Reinigungsbetriebsmodus läuft.

7. Mensch-Maschine-Schnittstellenvorrichtung (100) nach einem der vorhergehenden Ansprüche, wobei das Verarbeitungsmodul (202) ferner konfiguriert ist, um den Reinigungsbetriebsmodus auf der Basis einer entsprechenden Benutzereingabe zu deaktivieren.

8. Mensch-Maschine-Schnittstellenvorrichtung (100) nach einem der vorhergehenden Ansprüche, wobei das Verarbeitungsmodul (202) ferner konfiguriert ist, um den Reinigungsbetriebsmodus auf der Basis des Ablaufs eines vorgegebenen Zeitraums zu deaktivieren.

9. Mensch-Maschine-Schnittstellenvorrichtung (100) nach einem der vorhergehenden Ansprüche, wobei das Verarbeitungsmodul (202) ferner konfiguriert ist, um eine vorgegebene, kritische Bedingung in der Laufzeitanwendung zu identifizieren und den Reinigungsbetriebsmodus auf ihrer Basis zu deaktivieren.

10. Mensch-Maschine-Schnittstellenvorrichtung (100) nach einem der Ansprüche 7 bis 9, wobei das Verarbeitungsmodul (202) konfiguriert ist, um eine Benutzereingabe zum Bereitstellen einer Bestätigung zur Deaktivierung des Reinigungsbetriebsmodus anzufordern.

11. Verfahren für die Betätigung einer Mensch-Maschine-Schnittstellenvorrichtung (100), wobei die Mensch-Maschine-Schnittstellenvorrichtung (100) ein Verarbeitungsmodul (202) umfasst, das Verarbeitungsmodul (202) konfiguriert ist, um eine Laufzeitanwendung auszuführen, wobei die Laufzeitanwendung mindestens eine Anwendungsbenutzerschnittstelle umfasst; und ein Anzeigemodul (204), wobei das Anzeigemodul (204) konfiguriert ist, um die Anwendungsbenutzerschnittstelle auf einer darin vorgesehenen berührungsempfindlichen Anzeigefläche (206) zu erbringen, und ferner konfiguriert ist, um eine berührungsbasierte Interaktion damit zu erkennen, das Verfahren umfassend:
- Erbringen (602) einer Benutzerschnittstelle mit sauberem Bildschirm in Zusammenhang mit der Anwendungsbenutzerschnittstelle als eine transparente Überlagerung darauf derart, dass die Anwendungsbenutzerschnittstelle auf der berührungsempfindlichen Anzeigefläche (206) sichtbar bleibt, während die davon erhaltenen berührungsempfindlichen Eingaben mit der Benutzerschnittstelle mit sauberem Bildschirm assoziiert sind,
- Festlegen (604) eines Teilbereichs der Benutzerschnittstelle mit sauberem Bildschirm auf der Basis einer berührungsbasierten Interaktion mit der berührungsempfindlichen Anzeigefläche (206), und
- den Teilbereich mindestens teilweise nicht transparent machen (606) derart, dass verbleibende Bereiche der Anwendungsbenutzerschnittstelle für einen Benutzer der Mensch-Maschine-Schnittstellenvorrichtung (100) sichtbar bleiben.

12. Verfahren nach Anspruch 11, wobei der Teilbereich mindestens einer Interaktionsfläche auf der berührungsempfindlichen Anzeigefläche (206) entspricht, die an der berührungsbasierten Interaktion beteiligt ist.

13. Verfahren nach einem der vorhergehenden Ansprüche 11 und 12, wobei der Teilbereich in Übereinstimmung mi einer Änderung der Interaktionsfläche dynamisch aktualisiert wird, und wobei ferner der Teilbereich mindestens teilweise für einen gegebenen Zeitraum im Anschluss an die Beendigung der damit assoziierten berührungsbasierten Interaktion nicht transparent bleibt.

14. Verfahren nach einem der vorhergehenden Ansprüche 11 bis 13, ferner umfassend die Aktivierung des Reinigungsbetriebsmodus auf der Basis einer entsprechenden Benutzereingabe.

15. Verfahren nach einem der vorhergehenden Ansprüche 11 bis 14, ferner umfassend die Deaktivierung des Reinigungsbetriebsmodus auf der Basis einer entsprechenden Benutzereingabe, des Ablaufs eines vorgegebenen Zeitraums, einer vorgegebenen kritischen Bedingung in der Laufzeitanwendung und/oder einer Kombination davon.

## Revendications

1. Dispositif d'interface homme-machine (100), ledit dispositif d'interface homme-machine (100) comprenant :
- un module de traitement (202), ledit module de traitement (202) étant configuré pour exécuter une application d'exécution, dans lequel ladite application d'exécution comprend au moins une interface utilisateur d'application ; et
- un module d'affichage (204), ledit module d'affichage (204) étant configuré pour rendre ladite interface utilisateur d'application sur une surface d'affichage tactile (206) prévue dans celui-ci, et configuré en outre pour détecter une interaction tactile avec celle-ci,
**caractérisé en ce que** ledit dispositif d'interface homme-machine (100) peut fonctionner dans un mode de fonctionnement de nettoyage, dans lequel ledit module d'affichage (204) rend une interface utilisateur de nettoyage d'écran conjointement avec ladite interface utilisateur d'application en tant que superposition transparente sur celle-ci de sorte que ladite interface utilisateur d'application reste visible sur ladite surface d'affichage tactile (206) tandis que lesdites entrées tactiles reçues à partir de celle-ci sont associées à ladite interface utilisateur de nettoyage d'écran, dans lequel ledit module d'affichage (204) est configuré pour déterminer une région partielle de ladite interface utilisateur de nettoyage d'écran sur la base d'une interaction tactile avec ladite surface d'affichage tactile (206) et rendre ladite région partielle au moins partiellement non transparente de telle sorte que les régions restantes de l'interface utilisateur d'application restent visibles pour un utilisateur du dispositif d'interface homme-machine (100).

2. Dispositif d'interface homme-machine (100) selon la revendication 1, dans lequel ladite région partielle correspond au moins à une zone d'interaction sur ladite surface d'affichage tactile (206) engagée dans une interaction tactile.

3. Dispositif d'interface homme-machine (100) selon la revendication 2, dans lequel ladite région partielle est mise à jour dynamiquement en fonction d'une modification dans ladite zone d'interaction.

4. Dispositif d'interface homme-machine (100) selon l'une quelconque des revendications précédentes, dans lequel ladite région partielle reste au moins partiellement non transparente pendant une période de temps prédéterminée après la fin de ladite interaction tactile associée à celle-ci.

5. Dispositif d'interface homme-machine (100) selon l'une quelconque des revendications précédentes, dans lequel ledit module de traitement (202) est en outre configuré pour activer ledit mode de fonctionnement de nettoyage sur la base d'une entrée d'utilisateur à cet effet.

6. Dispositif d'interface homme-machine (100) selon l'une quelconque des revendications précédentes, dans lequel ledit module d'affichage (204) est en outre configuré pour afficher un message de notification (504) sur ladite surface d'affichage tactile (206) pendant que ledit dispositif d'interface homme-machine (100) fonctionne dans ledit mode de fonctionnement de nettoyage.

7. Dispositif d'interface homme-machine (100) selon l'une quelconque des revendications précédentes, dans lequel ledit module de traitement (202) est en outre configuré pour désactiver ledit mode de fonctionnement de nettoyage sur la base d'une entrée d'utilisateur à cet effet.

8. Dispositif d'interface homme-machine (100) selon l'une quelconque des revendications précédentes, dans lequel ledit module de traitement (202) est en outre configuré pour désactiver ledit mode de fonctionnement de nettoyage sur la base de l'écoulement d'une période de temps prédéfinie.

9. Dispositif d'interface homme-machine (100) selon l'une quelconque des revendications précédentes, dans lequel ledit module de traitement (202) est en outre configuré pour identifier une condition critique prédéfinie dans ladite application d'exécution et désactiver ledit mode de fonctionnement de nettoyage sur la base de celle-ci.

10. Dispositif d'interface homme-machine (100) selon l'une quelconque des revendications 7 à 9, dans lequel ledit module de traitement (202) est configuré pour demander une entrée d'utilisateur pour fournir une confirmation pour désactiver ledit mode de fonctionnement de nettoyage.

11. Procédé de fonctionnement d'un dispositif d'interface homme-machine (100), ledit dispositif d'interface homme-machine (100) comprenant un module de traitement (202), ledit module de traitement (202) étant configuré pour exécuter une application d'exécution, dans lequel ladite application d'exécution comprend au moins une interface utilisateur d'application ; et un module d'affichage (204), ledit module d'affichage (204) étant configuré pour rendre ladite interface utilisateur d'application sur une surface d'affichage tactile (206) prévue dans celui-ci, et configuré en outre pour détecter une interaction tactile avec celle-ci, ledit procédé comprenant de :
- rendre (602) une interface utilisateur de nettoyage d'écran conjointement avec ladite interface utilisateur d'application en tant que superposition transparente sur celle-ci de sorte que ladite interface utilisateur d'application reste visible sur ladite surface d'affichage tactile (206) tandis que lesdites entrées tactiles reçues à partir de celle-ci sont associées à ladite interface utilisateur de nettoyage d'écran,
- déterminer (604) une région partielle de ladite interface utilisateur de nettoyage d'écran sur la base d'une interaction tactile avec ladite surface d'affichage tactile (206), et
- rendre (606) ladite région partielle au moins partiellement non transparente de sorte que les régions restantes de l'interface utilisateur d'application restent visibles pour un utilisateur du dispositif d'interface homme-machine (100).

12. Procédé selon la revendication 11, dans lequel ladite région partielle correspond au moins à une zone d'interaction sur ladite surface d'affichage tactile (206) engagée dans une interaction tactile.

13. Procédé selon l'une quelconque des revendications précédentes 11 et 12, dans lequel ladite région partielle est mise à jour dynamiquement en fonction d'une modification dans ladite zone d'interaction, et en outre dans lequel ladite région partielle reste au moins partiellement non transparente pendant une période de temps prédéterminée postérieure à la fin de ladite interaction tactile associée à celle-ci.

14. Procédé selon l'une quelconque des revendications précédentes 11 à 13, comprenant en outre l'activation dudit mode de fonctionnement de nettoyage sur la base d'une entrée d'utilisateur à cet effet.

15. Procédé selon l'une quelconque des revendications précédentes 11 à 14, comprenant en outre de désactiver ledit mode de fonctionnement de nettoyage sur la base d'une entrée utilisateur à cet effet, de l'écoulement d'une période temporelle prédéfinie, d'une condition critique prédéfinie dans ladite application d'exécution et/ou d'une combinaison de ceux-ci.
